# DEMANDE DE BREVET EUROPEEN

(11) **EP 3 992 403 A1**
(43) Date de publication de la demande: **04.05.2022**
(21) Numéro de dépôt: 21205017.3
(22) Date de dépôt: 27.10.2021
(51) Int. Cl.: E05B 77/34, H02K 5/10, E05B 81/34, E05B 81/40, E05B 85/02, E05B 85/10, E05B 81/28, E05B 81/20, E05B 77/36, E05B 81/06

(54) **ACTIONNEUR ELECTROMECANIQUE POUR VEHICULE AUTOMOBILE**

(30) Priorité: 28.10.2020 FR 2011014
(71) Demandeur: Akwel Vigo Spain SL, 36213 Vigo Pontevedra (ES)
(72) Inventeur: COUTO MAQUIEIRA, Delmiro Javier, 36157 Pontevedra (ES); VAZQUEZ CARBALLO, José Oscar, 36201 Vigo (ES); PAMPIN AGRA, Oscar, 36205 Vigo Pontevedra (ES); CORREIA DA MOTA, Vasco Jorge, 36350 Nigran Pontevedra (PT); MARTINEZ NOVAS, David, 36207 Vigo Pontevedra (ES); VAZQUEZ GARCIA, Rodrigo, 36300 Baiona Pontevedra (ES); GARCIA RODRIGUEZ, Julio, 36003 Pontevedra (ES)

(57) **Abrégé**

Cet actionneur (10) comprend un boîtier (12) comprenant deux demi-coques inférieure (14) et supérieure (16) superposables l'une sur l'autre pour définir un logement interne du boîtier (12) à l'intérieur duquel sont disposés un entraînement motorisé (22) comprenant un moteur électrique (24), un arbre (26) couplé en rotation avec le moteur par un agencement à engrenage (28) comprenant au moins une roue dentée (30) reliée solidaire en rotation à l'arbre (26), une tige de poussée (32) déplaçable longitudinalement hors du boîtier (12) selon un axe principal (X), en prise de force avec l'arbre (26). Selon l'invention, les demi-coques inférieure (14) et supérieure (16) comprenant respectivement des berceaux inférieur (44) et supérieur (46) de réception de l'organe mécanique comprenant l'arbre (26), la tige (32) et la roue dentée (30), les berceaux (44, 46) délimitent, par complémentarité de forme, au moins une région ajustée épousant étroitement au moins localement de façon sensiblement circonférentielle la forme extérieure de l'organe mécanique, ladite région étant conformée pour contenir un mouvement vibratoire tout en autorisant un mouvement fonctionnel de l'organe.

## Description

La présente invention concerne un actionneur électromécanique pour véhicule automobile, en particulier pour actionner une ouverture et une fermeture d'une poignée de véhicule automobile.

De façon générale, un actionneur de ce type comprend un boîtier dans lequel est agencé un moteur électrique qui entraîne un arbre via un agencement d'engrenage. L'arbre agit de son côté sur une tige de poussée déplaçable longitudinalement par rapport au boîtier, laquelle déplace par poussée par exemple un étrier entraînant en mouvement une poignée de porte de véhicule automobile dans une position d'ouverture ou de fermeture.

Un tel actionneur est par exemple connu de l'art antérieur, en particulier de la demande de brevet EP2724059A1. L'actionneur se présente par exemple sous la forme d'un boîtier muni d'un orifice latéral guidant longitudinalement la tige de poussée hors du boîtier. Le boîtier présente en outre une prise de connexion électrique pour son raccordement électrique à une source d'alimentation électrique externe, par exemple une batterie du véhicule automobile.

Le mouvement des différents organes mécaniques à l'intérieur du boîtier s'accompagne d'un bruit qui vient s'ajouter au bruit du moteur électrique. Ce bruit accompagnant l'ouverture de la poignée peut être aisément perceptible par l'utilisateur lorsqu'il se trouve à proximité de son véhicule.

Il en résulte que l'utilisateur du véhicule peut avoir une impression de mauvaise conception ou d'une piètre qualité des matériaux utilisés dans le mécanisme de poignée à cause des bruits indésirables accompagnant l'ouverture et/ou la fermeture de la poignée. En d'autres termes, la qualité du véhicule perçue par l'utilisateur peut s'en trouver alors affectée.

La présente invention a pour but de remédier aux inconvénients précités de l'art antérieur.

A cet effet, l'invention a notamment pour objet un actionneur électromécanique pour véhicule automobile, en particulier pour actionner une ouverture d'une poignée de véhicule automobile, du type comprenant un boîtier comprenant deux demi-coques inférieure et supérieure superposables l'une sur l'autre pour définir un logement interne du boîtier à l'intérieur duquel sont disposés un entraînement motorisé comprenant un moteur électrique, un arbre couplé en rotation avec le moteur par un agencement à engrenage comprenant au moins une roue dentée reliée solidaire en rotation à l'arbre, une tige de poussée déplaçable longitudinalement hors du boîtier selon un axe principal, en prise de force avec l'arbre, caractérisé en ce que les demi-coques inférieure et supérieure délimitant respectivement des berceaux inférieur et supérieur de réception de l'organe mécanique comprenant l'arbre, de la tige et de la roue dentée, les berceaux inférieur et supérieur délimitent, par complémentarité de forme au moins une région ajustée épousant étroitement au moins localement de façon sensiblement circonférentielle la forme extérieure de l'organe mécanique, cette région étant conformée pour contenir un mouvement vibratoire tout en autorisant un mouvement fonctionnel de l'organe.

L'invention permet lors de l'assemblage des deux demi-coques l'une avec l'autre pour former le boîtier de définir une région de guidage en mouvement de l'organe à l'intérieur de laquelle l'organe mécanique peut se déplacer mais est limité en amplitude vibratoire grâce au dimensionnement ajusté de la région de guidage. Dans cette région, les berceaux inférieur et supérieur épousent étroitement localement la forme de l'organe mécanique ce qui stabilise en mouvement ce dernier. Par ailleurs, le fait de former cette région par simple réunion des deux demi-coques du boîtier permet de limiter le nombre de pièces.

Un actionneur selon l'invention peut en outre comporter l'une ou plusieurs des caractéristiques suivantes.

Dans un mode de réalisation préféré de l'invention, les demi-coques délimitent deux régions ajustées s'étendant autour de l'arbre de chaque côté de la roue dentée, l'arbre se prolongeant au-delà de la roue dentée vers son extrémité proximale.

Cette configuration des deux régions autour de la roue dentée permet de réduire les vibrations de la roue ainsi que de l'arbre qui est solidaire en rotation avec la roue.

De préférence, la région ajustée comprend un palier de guidage en rotation de l'arbre sensiblement circonférentiel, formé par la réunion d'un support de palier inférieur de la demi-coque inférieure et d'un support de palier supérieur de la demi-coque supérieure.

De préférence, au moins un support de palier inférieur ou supérieur présente un profil transversal cintré ouvert à l'entrée pour retenir l'arbre par clipsage.

Le positionnement de l'organe se fait alors très simplement à l'intérieur d'une des demi-coques par clipsage de l'arbre dans au moins un support de palier inférieur ou supérieur.

En variante, le support de palier inférieur et le support de palier supérieur présentent chacun un siège de réception semi-cylindrique d'un segment de l'arbre et présentent axialement en bordure du siège un profil étagé complémentaire pour coopérer par encastrement ou emboîtement de ces profils étagés l'un dans l'autre.

Dans un mode de réalisation préféré, la région ajustée comprend un fourreau de coulissement de la tige de poussée débouchant sur une ouverture de sortie de la tige de poussée hors du boîtier, ce fourreau étant formé par la réunion d'un logement inférieur d'extension longitudinale du berceau inférieur et d'un logement supérieur d'extension longitudinale du berceau supérieur.

Ce fourreau de coulissement de la tige de poussée permet de guider longitudinalement cette tige tout en limitant les mouvements vibratoires rotatifs par exemple.

De préférence, l'arbre présente sur un tronçon partiel un pas de vis et la tige de poussée comprend un pas de vis complémentaire qui coopère avec le pas de vis de l'arbre, par exemple le pas de vis de l'arbre est un filetage extérieur et le pas de vis complémentaire est un taraudage ménagé dans un alésage de la tige de poussée.

Dans un mode de réalisation préféré de l'invention, l'arbre prend appui axialement avec son extrémité proximale sur une zone localisée de contre-appui axial du boîtier, le boîtier présentant dans cette zone une encoche de retenue d'une lamelle de friction, par exemple réalisée dans un matériau métallique.

L'actionneur comprend deux orifices d'interconnexion électrique inférieur et supérieur ménagés respectivement dans la demi-coque inférieure et dans la demi-coque supérieure, les deux orifices s'étendant en retrait d'une jupe d'étanchéité périphérique faisant saillie à l'extérieur du boîtier et étant fermée par réunion de deux demi-jupes inférieure et supérieure respectivement de la demi-coque inférieure et de la demi-coque supérieure.

Du fait que les deux orifices sont ménagés en retrait de la jupe d'étanchéité, ces deux orifices sont mieux protégés des intrusions d'humidité.

De préférence, les orifices sont séparés l'un de l'autre par des bordures périphériques de la demi-coque supérieure et de la demi-coque inférieure et comprennent un joint d'étanchéité suivant la circonférence de chaque orifice.

De préférence, la demi-coque inférieure et/ou supérieure comprend un logement de réception du moteur électrique, ce logement est pourvu en surface d'un relief nervuré d'amortissement du bruit.

Par exemple, ce logement est formé par la réunion des deux demi-coques l'une avec l'autre et le relief nervuré s'étend sur les deux parties réunies du logement afin d'amortir les bruits produits par le moteur.

Dans un mode de réalisation préféré de l'invention, l'une des bordures d'appui circonférentiel d'au moins une demi-coque présente une piste surmoulée formant un joint d'étanchéité périphérique, cette piste s'étendant en suivant un contour périphérique fermé le long de la bordure d'appui qui comprend au moins un relief incurvé correspondant à un orifice externe du boîtier.

Dans un autre mode de réalisation préféré de l'invention, l'autre bordure comprend une gorge de réception du joint périphérique qui est interrompue localement le long d'un relief incurvé complémentaire par une portion de piste surmoulée afin de former un joint d'étanchéité annulaire autour de l'orifice externe par réunion des deux reliefs incurvés complémentaires.

Dans un autre mode de réalisation préféré de l'invention, la piste est interrompue localement par une portion de piste surmoulée s'étendant sur une portion de la bordure d'appui délimitant un bord d'un orifice d'interconnexion électrique.

Dans un mode de réalisation préféré de l'invention, la piste surmoulée comprend une partie se prolongeant à l'intérieur du logement de réception du moteur pour former le relief nervuré d'amortissement du bruit.

L'invention met ainsi à profit une étape de surmoulage d'une piste pour réaliser une fonction d'étanchéité pour la réalisation d'un relief nervuré dans le logement du moteur pour créer un amortissement des bruits de fonctionnement du moteur. Le relief nervuré d'amortissement du bruit est alors réalisé lors d'une même étape de surmoulage de la piste formant joint d'étanchéité.

D'autres caractéristiques et avantages de l'invention apparaîtront à la lumière de la description qui suit, faite en référence aux dessins annexés dans lesquels :
[Fig 1] : la figure 1 illustre une vue en perspective d'un actionneur selon l'invention ;
[Fig 2] : la figure 2 illustre l'actionneur de la figure 1 dans lequel un embout de raccordement électrique est séparé d'un boîtier de l'actionneur, l'embout étant présenté selon deux vues en perspective distinctes ;
[Fig 3] : la figure 3 illustre une vue en coupe selon un plan transversal et en perspective de l'actionneur de la figure 2 sans l'embout de raccordement électrique ;
[Fig 4] : la figure 4 est une vue en perspective de l'actionneur de la figure 3 comprenant l'actionneur à l'état démonté ;
[Fig 5] : la figure 5 est une vue en perspective de l'actionneur de la figure 4 comprenant le boîtier à l'état démonté ;
[Fig 6] : la figure 6 représente une vue en perspective d'un organe mécanique de l'actionneur ;.
[Fig 7] : la figure 7 est une vue en coupe selon un plan axial vertical de l'actionneur de la figure 1 ;
[Fig 8] : la figure 8 correspond à la figure 7 dans laquelle des régions R1 à R4 ont été identifiées de façon schématique ;
[Fig 9] : la figure 9 est représente une vue schématique en perspective d'un boîtier simplifié de l'actionneur et de l'organe mécanique de l'actionneur ;
[Fig 10] : la figure 10 est une vue en coupe dans un plan orthogonal à l'axe X de la figure 9 illustrant l'insertion de l'organe à l'intérieur de son logement dans le boîtier ;
[Fig 11] : la figure 11 représente une vue écorchée et en coupe de l'actionneur selon une variante de l'invention.
[Fig 12] : la figure 12 représente une vue en coupe de l'actionneur dans un plan orthogonal à l'axe X selon la variante de l'invention illustrée en figure 11.
[Fig 13] : la figure 13 est une vue partielle en coupe de l'actionneur dans un plan axial selon la variante de l'invention illustrée en figure 11 ou 12.
[Fig 14] : la figure 14 représente une vue partielle en coupe du raccordement électrique d'un embout connecteur à une prise de connexion de l'actionneur selon l'invention.
[Fig 15] : la figure 15 représente une autre vue partielle en coupe du raccordement électrique .

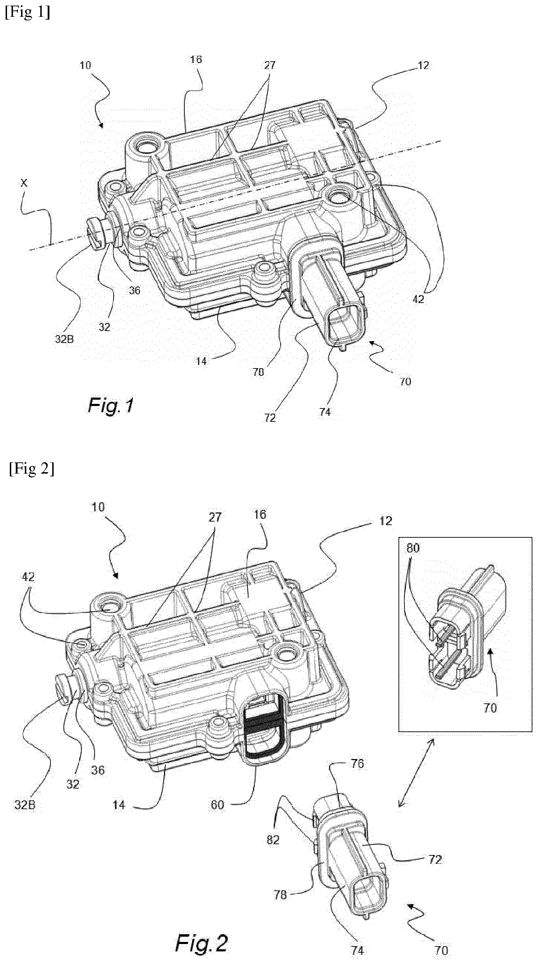

On a représenté sur **la** **figure 1** un actionneur électromécanique pour véhicule automobile selon l'invention, en particulier pour actionner un verrouillage d'une poignée de véhicule automobile. Cet actionneur est désigné par la référence générale 10. De façon générale et au sens de l'invention, par dispositif électromécanique (dans le cas présent un actionneur), on entend un dispositif comprenant un ou des organes mécaniques fonctionnant en liaison avec un ou des organes électriques. Cet actionneur 10 comprend un axe de fonctionnement principal désigné par X, comme illustré sur **la** **figure 1****.**

Dans la suite de la description, les termes horizontal et vertical se réfèrent à une disposition de l'actionneur 10 en utilisation normale, telle que celle illustrée sur les figures. Par ailleurs, un plan axial est défini comme un plan comprenant l'axe X. Un plan transversal est un plan orthogonal à l'axe X.

L'actionneur 10 comprend un boîtier 12, représenté fermé sur **les** **figures 1 à 3****.** En particulier, ce boîtier 12 comprend deux demi-coques inférieure 14 et supérieure 16. Ces deux demi-coques 14 et 16 sont complémentaires et sont par exemple assemblées entre elles à leur périphérie suivant un plan axial horizontal du boîtier 12.

Dans l'exemple décrit, les deux-demi coques 14 et 16 sont réalisées dans un matériau rigide, par exemple par moulage d'une matière polymère. Par exemple, le boîtier 12 est réalisé en plastique injecté pouvant être ou non chargé. Par exemple, la matière plastique comprend essentiellement au moins un polyamide aliphatique, par exemple du PA66, du PA12 ou au moins du Polyphthalamide (PPA).

Les deux demi-coques 14 et 16 comprennent par ailleurs en surface des reliefs 27 de rigidification telles que des nervures, des ailettes de dimension et de répartition variables, formant comme cela est représentée en exemple sur les figures, une structure alvéolaire.

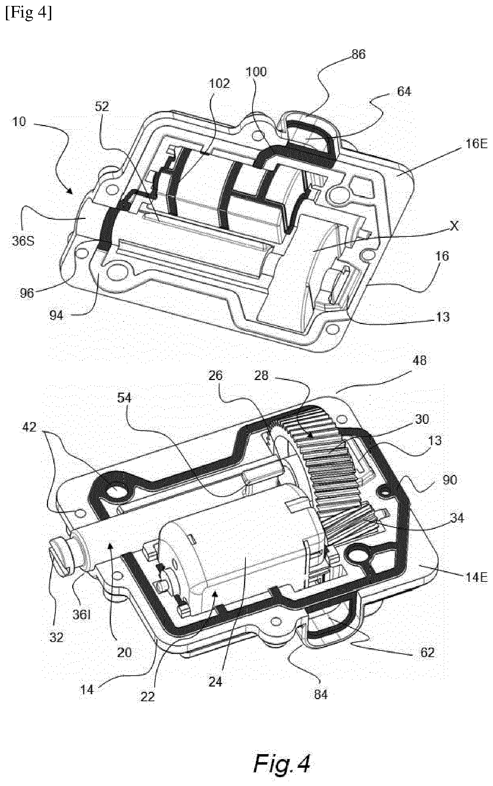

Comme cela est représenté sur **la** **figure 4** qui illustre le boîtier 12 dans une configuration ouverte, chaque demi-coque 14, 16 délimite en périphérie une bordure périphérique 14E, 16E venant se superposer l'une sur l'autre, matérialisant la jointure entre les deux demi-coques 14, 16 du boîtier 12 et s'étendant chacune selon un plan parallèle au plan axial du boîtier 12. Les deux demi-coques inférieure 14 et supérieure 16 se referment l'une sur l'autre le long de ces bordures 14E, 16E pour définir un logement interne du boîtier 12 à l'intérieur duquel sont disposés des organes mécaniques et électriques de l'actionneur 10 qui seront décrits plus en détail ci-dessous.

Dans le mode de réalisation préféré de l'invention illustré sur **la** **figure 4****,** l'actionneur 10 comprend un ensemble 20 d'organes électriques et mécaniques parmi lesquels :
- un entraînement motorisé 22 comprenant un moteur électrique 24,
- un arbre 26 entraîné en rotation par le moteur 24 par un agencement à engrenage 28 comprenant au moins une roue dentée 30 reliée solidaire en rotation à l'arbre 26,
- une tige 32 de poussée déplaçable longitudinalement par rapport au boîtier 12, hors du boîtier 12, en prise de force avec l'arbre 26.

De préférence, dans l'exemple décrit, l'agencement à engrenage 28 comprend en plus de la roue dentée 30, un pignon 34 de moteur qui vient en prise avec la roue dentée 30. Toutefois, l'agencement à engrenage 28 peut être configuré différemment sans sortir pour autant du cadre de l'invention.

D'un point de vue fonctionnel, la tige de poussée 32, ou poussoir, est guidée à l'intérieur du boîtier 12 pour pouvoir coulisser axialement hors du boîtier 12 par un orifice latéral 36 du boîtier 12. Le moteur électrique 24 est de préférence réversible de sorte que le poussoir 32 peut être amené sélectivement à une position de fermeture ou une position d'ouverture selon le sens de rotation d'entraînement de l'arbre 26.

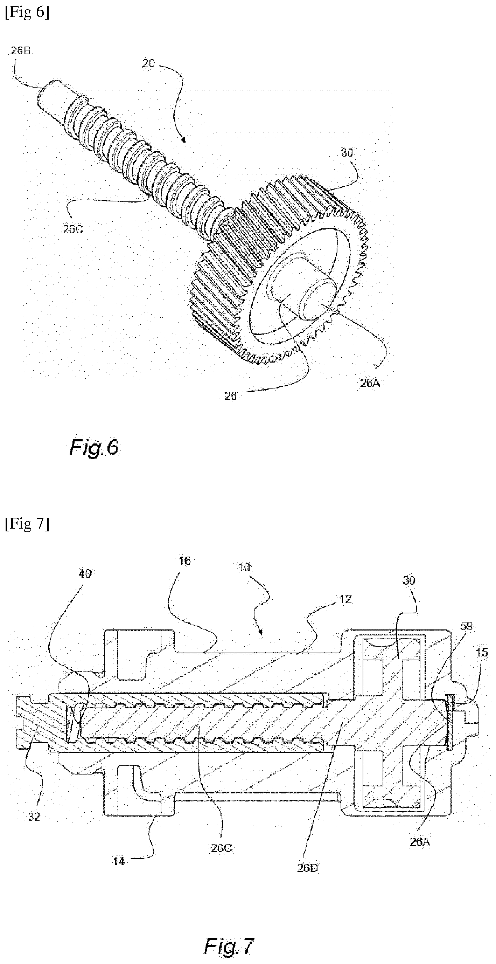

A cet effet, comme illustré sur **les** **figures 6 et 7****,** l'arbre 26 présente sur un tronçon partiel 26C un pas de vis et la tige de poussée 32 comprend un pas de vis complémentaire qui coopère avec le pas de vis 26C de l'arbre 26. Par exemple le pas de vis de l'arbre 26 est un filetage extérieur et le pas de vis complémentaire est un taraudage ménagé dans un alésage 40 de la tige de poussée 32.

Dans l'exemple décrit illustré **en** **figure 6****,** la roue dentée 30 est montée sur l'arbre 26 de telle sorte que l'arbre 26 se prolonge au-delà de la roue dentée 30 vers son extrémité proximale 26A, par opposition à son extrémité distale 26B qui est couplée à l'intérieur de l'alésage 40 de la tige 32. Par ailleurs, l'arbre 26 comprend un collet 26D qui coopère avec une face frontale de l'extrémité proximale 32A de la tige 32. En outre, la roue dentée 30 est agencée sur l'arbre 26 entre le collet 26D et l'extrémité proximale 26A de l'arbre 26.

Selon le mode de réalisation préféré de l'invention, le boîtier 12 a une forme globalement parallélépipédique définie par les deux demi-coques 14, 16 refermées l'une sur l'autre. La fixation des deux demi-coques 14, 16 peut être permanente (collage, soudage, ...) ou non permanente (clippage, vissage, ...).

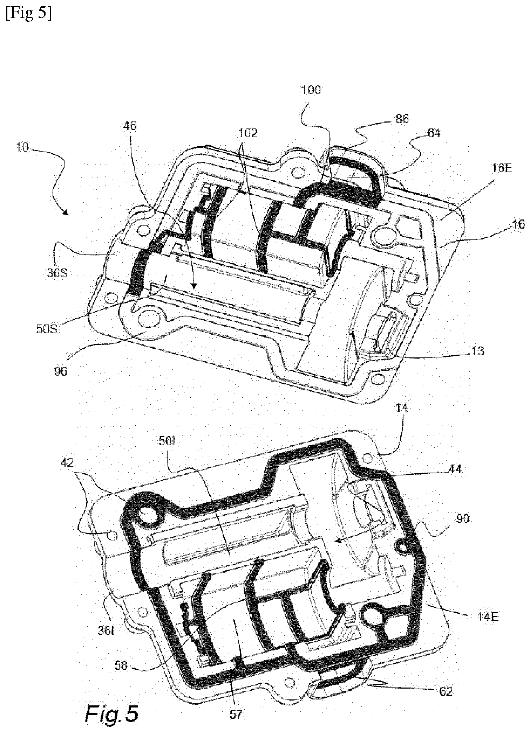

Dans l'exemple illustré sur **les** **figures 4** **et** **5****,** la bordure périphérique 14E ou 16E de chaque demi-coque 14, 16 présente une pluralité de perçages 42 taraudés ou non permettant de définir autant d'éléments de jonction par exemple par vissage des deux demi-coques 14, 16 l'une avec l'autre. La répartition des perçages 42 le long de chacune des bordures 14E ou 16E, et en particulier leur nombre, leur dimension et leur espacement, est optimisée afin d'assurer un appui équilibré des deux demi-coques 14 et 16 l'une contre l'autre.

Par ailleurs, de préférence, la bordure circonférentielle d'appui 14E ou 16E de chaque demi-coque 14 et 16, de préférence de contour rectangulaire, présente localement un décrochement incurvé 36I, 36S nécessaire pour délimiter un passage sensiblement circulaire de la tige poussoir 32. La réunion des deux demi-coques 14 et 16 délimite ainsi l'orifice de passage 36.

Le logement interne délimité par la réunion des deux demi-coques 14 et 16 va être décrit plus précisément ci-après pour loger l'ensemble 20 des organes électriques et mécaniques précédemment décrits.

Selon l'invention et comme cela est illustré **en** **figure 5** de façon précise, les demi-coques inférieure 14 et supérieure 16 comprennent respectivement des berceaux inférieur 44 et supérieur 46 de réception de l'arbre 26, de la roue dentée 30 et de la tige de poussée 32. Par berceau, on entend au sens de la présente invention, une conformation de chaque demi-coque permettant un accueil et un positionnement des différents organes de l'actionneur à l'intérieur du boîtier 12 par complémentarité de forme. Ainsi, les berceaux inférieur 44 et supérieur 46 délimitent, par complémentarité de forme, une enveloppe autour de ladite direction axiale X épousant globalement la forme extérieure de l'organe mécanique formé par l'arbre 26, la roue dentée 30 et la tige de poussée 32.

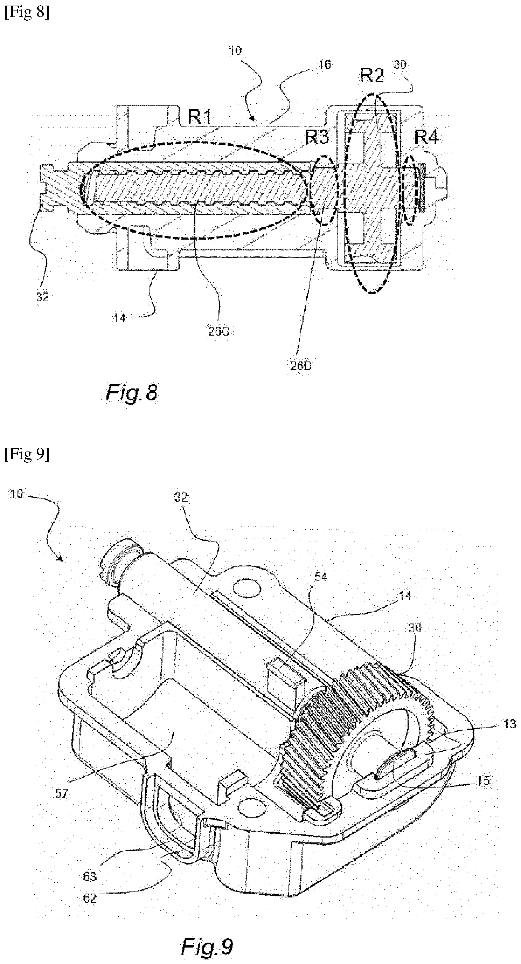

Conformément à un aspect de la présente invention et comme cela est illustré schématiquement **en** **figure 8****,** cette enveloppe présente en outre au moins une région R ajustée sensiblement circonférentielle autour de l'axe principal X. Cette région ajustée R épouse étroitement au moins localement la forme extérieure englobant l'arbre 26, la roue dentée 30 et la tige de poussée 32. En outre, cette région R est conformée pour contenir un mouvement vibratoire tout en autorisant un mouvement fonctionnel de l'organe mécanique comprenant l'arbre, de la roue dentée et/ou de la tige de poussée, en particulier des mouvements de rotation et de translation.

Dans le mode de réalisation préféré de l'invention, l'enveloppe délimite par exemple une première région R1. Cette région R1 est formée par un fourreau 50 de coulissement de la tige de poussée 32 débouchant sur l'ouverture de sortie 36 de la tige de poussée 32 hors du boîtier 12. Ce fourreau 50 est formé par la réunion d'un logement inférieur d'extension longitudinale 50I du berceau inférieur 44 et d'un logement supérieur d'extension longitudinale 50S du berceau supérieur 46. Chacun de ces deux logements 50I, 50S a une forme par exemple sensiblement semi-cylindrique.

En outre, de préférence, sur l'une des demi-coques 14 est également prévue une rainure de guidage 52 dans le fourreau 50 d'un doigt 54 ménagé en saillie externe sur le corps de la tige de poussoir 32. Bien entendu, en variante non illustrée, le doigt de guidage 54 peut être formé par une protubérance saillante à l'intérieur du fourreau 50 de coulissement et la rainure 52 peut être réalisée sur la surface externe du corps de la tige de poussoir 32.

L'enveloppe délimite en outre une deuxième région R2 de préférence une cavité de réception de la roue dentée 30 de forme globalement cylindrique, formée par la réunion des deux demi-coques 14 et 16.

De préférence, l'enveloppe délimite une troisième région R3 comprenant un palier de guidage en rotation 56 de l'arbre de révolution 26, formé par la réunion d'un support de palier inférieur 56I de la demi-coque inférieure 14 et d'un support de palier supérieur 56S de la demi-coque supérieure 16, le support de palier supérieur 56B venant coopérer par complémentarité de forme avec le support de palier inférieur 56A.

Dans l'actionneur 10 illustré sur **les** **figures 1 à 10****,** le support de palier inférieur 56A (ou supérieur) présente un profil transversal ouvert cintré à l'entrée pour retenir par clipsage l'arbre 26 à l'intérieur du palier inférieur et/ou supérieur. Par exemple, le profil du support de palier 56A a une forme globalement de « oméga ».

L'autre support de palier supérieur 56S (ou inférieur) complémentaire comprend un profil en forme de portion de cercle dimensionnée pour venir refermer le profil du support de palier inférieur 56I (ou supérieur). Par conséquent, le palier de guidage en rotation 56 est sensiblement de révolution autour de l'arbre 26.

De préférence, l'enveloppe comprend deux régions ajustées R3 et R4 s'étendant autour de l'arbre 26 de chaque côté de la roue dentée 30, l'arbre 26 se prolongeant au-delà de la roue dentée 30 vers son extrémité proximale 26A. Ces deux régions R3 et R4 comprennent deux paliers de guidage en rotation 56 conforme à la description précédente.

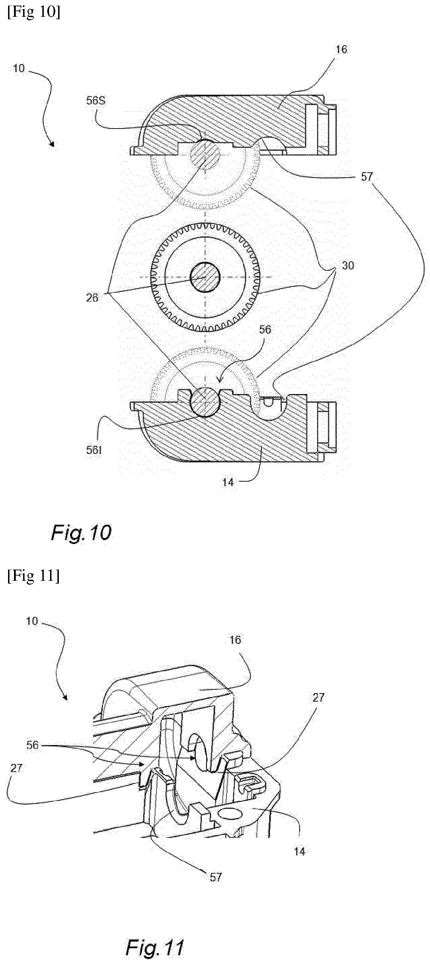

Dans une variante illustrée sur **les** **figures 11 à 13****,** le support de palier inférieur 56I et le support de palier supérieur 56S présentent chacun un siège de réception semi-cylindrique d'un segment de l'arbre 26 et présentent axialement en bordure du siège un profil étagé 27 complémentaire pour coopérer par encastrement ou par emboîtement de ces profils étagés 27 l'un dans l'autre.

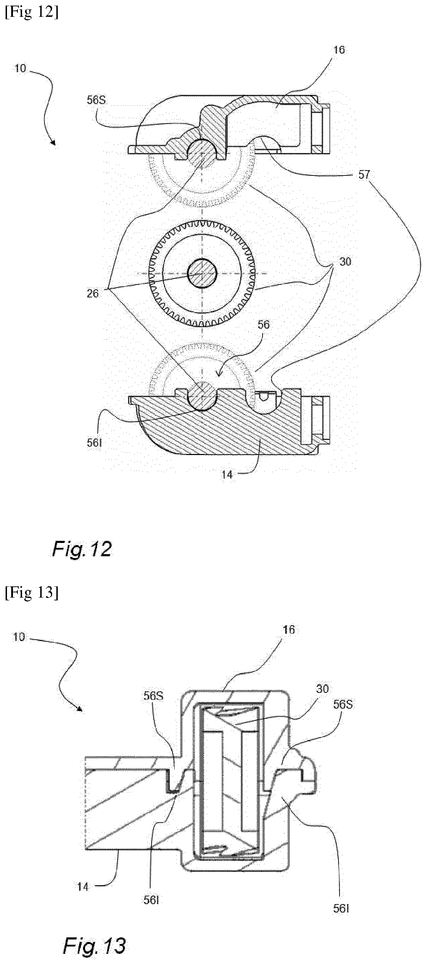

On voit notamment sur **ces** **figures 11 à 13** que le palier 56 de la région R3 dit distal car positionné du côté de l'extrémité distale 26B de l'arbre 26 présente un profil axial étagé 27 comme cela est visible sur **la** **figure 13** sur chaque support de palier inférieur 56I et supérieur 56S de telle sorte que les reliefs et les creux des profils étagés sont conjugués selon la direction axiale. Ces deux supports de palier inférieur 56I et supérieur 56S viennent délimiter un palier de guidage 56 de forme générale cylindrique de révolution autour de l'axe X.

On voit en outre, notamment sur **la** **figure 11** **et la** **figure 13** que le palier 56 de la région R4 dit proximal car positionné du côté de l'extrémité proximale 26A de l'arbre 26 présente également un profil axial étagé sur chaque support de palier inférieur 56I et supérieur 56S. Ces deux supports de palier inférieur 56I et supérieur 56S viennent également délimiter un palier de guidage 56 de forme générale cylindrique de révolution autour de l'axe X.

En outre, les demi-coques inférieure et supérieure 14 et 16 délimitent ensemble un logement de réception du moteur électrique 24. De préférence, ce logement 57 est pourvu en surface d'un relief nervuré 58 d'amortissement du bruit.

En outre, lors du déplacement de la tige poussoir 32 entraînée en mouvement par l'arbre 26, une force axiale F de contre-réaction d'une paroi du boîtier 12 agit sur l'arbre 26. A cet effet, l'arbre 26 prend appui avec son extrémité proximale 26A contre une zone de contre-appui axial 59 formé sur une paroi interne latérale du boîtier 12 **(****figure 7****).** Afin que la friction ne soit pas trop grande lorsque l'arbre 26 tourne, l'extrémité frontale 26A de l'arbre 26 est par exemple réalisée légèrement bombée vers l'extérieur pour réaliser un contact quasi-ponctuel contre la paroi de contre-appui 59. En raison de la faible surface, la friction est ainsi minimisée.

Par ailleurs, afin de protéger cette zone 59, sollicitée mécaniquement par l'appui de l'arbre 26, d'une usure prématurée et pour réduire les bruits, le boîtier 12 présente sur sa paroi intérieure une encoche 13 de retenue d'une lamelle de friction 15, par exemple réalisée dans un matériau métallique.

Afin de réaliser l'interconnexion électrique du moteur 24 avec une source d'alimentation électrique externe, telle qu'une batterie du véhicule, le boîtier 12 comprend une prise de connexion électrique 60 comprenant deux orifices d'interconnexion électrique inférieur 62 et supérieur 64 respectivement ménagés dans la demi-coque inférieure 14 et dans la demi-coque supérieure 16. Par ailleurs, de préférence et comme cela est visible sur **la** **figure 1 ou 2****,** ces orifices 62 et 64 d'interconnexion électrique sont configurés pour coopérer avec un embout connecteur 70 interchangeable et amovible de l'actionneur 10.

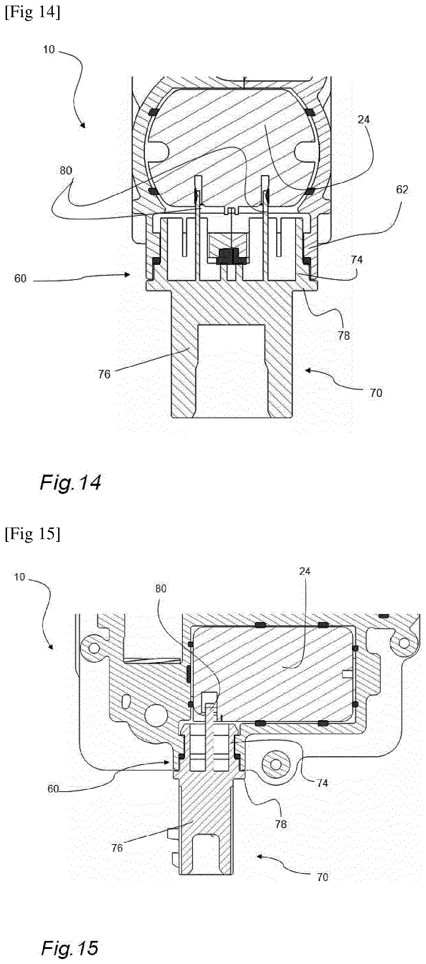

Un tel embout 70 est représenté en détail sur **la** **figure 2** **et sur les** **figures 14 et 15****.** Un tel embout 70 comprend dans l'exemple décrit un corps 72 de forme générale tubulaire délimitant une partie distale 74 de raccordement à un circuit électrique externe et une partie proximale 76 de raccordement à la prise 60 du boîtier 12. Les deux parties distale 74 et proximale 76 sont séparées entre elles par une paroi de séparation 78, cette paroi 78 étant traversée de part et d'autre par deux broches métalliques 80 pour la conduction électrique.

De préférence, les deux orifices 62, 64 s'étendent en retrait d'une paroi périphérique 82 faisant saillie à l'extérieur du boîtier 12, la paroi périphérique formant une jupe d'étanchéité 82 de contour fermé entourant les deux orifices 62 et 64.

A cet effet, dans cet exemple, la jupe 82 est formée par la réunion de deux demi-jupes inférieure 84 et supérieure 86 respectivement de la demi-coque inférieure 14 et de la demi-coque supérieure 16 et les orifices d'interconnexion électrique 62, 64 sont séparés l'un de l'autre par des bordures périphériques 14E et 16E de la demi-coque supérieure 16 et de la demi-coque inférieure 14 venant en appui l'une contre l'autre.

Comme cela est illustré sur la figure 2, chaque orifice 62 ou 64 délimite un contour arrondi en forme de « U » fermé par la bordure périphérique 14E ou 16E de la demi-coque correspondante. Par ailleurs, chaque orifice 62 ou 64 est délimitée par un cadre intérieur 63 délimitant un siège interne pour recevoir un joint d'étanchéité qui sera décrit ci-après (**figure 9**).

Comme cela est visible sur **la** **figure 1** **et des** **figures 14 et 15****,** l'embout 70 vient s'emmancher à l'intérieur de la prise 60 d'interconnexion électrique de telle sorte que chacune des broches métalliques 80 s'étendent au travers d'un des orifices d'interconnexion 62 ou 64. Dans cet exemple, les broches métalliques 80 viennent alors en contact électrique avec des contacts électriques correspondants du moteur électrique 24.

Comme cela apparaît clairement sur **la** **figure 1****,** la paroi transversale 78 vient obturer l'ouverture délimitée par la jupe d'étanchéité 82. Enfin, dans cet exemple, l'embout connecteur 70 comprend dans sa partie proximale 76 des ergots d'encliquetage 82 coopérant avec des épaulements internes d'une paroi interne du boîtier 12.

Un tel boîtier 12 ainsi constitué forme une protection mécanique des organes mécaniques et électriques logés à l'intérieur mais également une protection étanche pour empêcher l'introduction de poussières ou d'eau à l'intérieur du boîtier 12 comme cela va être expliqué de façon détaillée ci-après.

Il est en effet souhaitable d'étanchéifier au mieux le boîtier 12 afin de préserver, de toute intrusion d'humidité l'intérieur du logement et notamment afin de protéger les pièces métalliques de l'actionneur 10 d'un vieillissement prématuré dû à l'oxydation. A cet effet, de préférence, un joint d'étanchéité 90 est prévu dans le plan de jointure des deux demi-coques 14 et 16, visible notamment sur **la** **figure 4****.**

En effet, de préférence au moins une des demi-coques 14, 16 présente sur sa bordure périphérique un joint circonférentiel 90 sur tout ou partie de cette périphérie. Il est toutefois préférable que le joint 90 soit fixé de façon continue, sur toute sa longueur et sur toute la surface de contact de la zone de jonction y compris à l'endroit des perçages réalisés pour l'assemblage du boîtier 12 qui sont autant de points d'entrée à l'humidité et à la poussière. Ce joint 90 doit en outre résister aux sollicitations thermiques et mécaniques auxquelles peut être soumis l'actionneur 10.

De préférence, le joint 90 est rapporté par surmoulage d'une piste 92 sur au moins l'une des faces d'appui des bordures périphériques 14E ou 16E. De préférence, l'autre face d'appui en regard de la face pourvue du joint 90 peut comporter une gorge complémentaire 94 pour recevoir le joint 90.

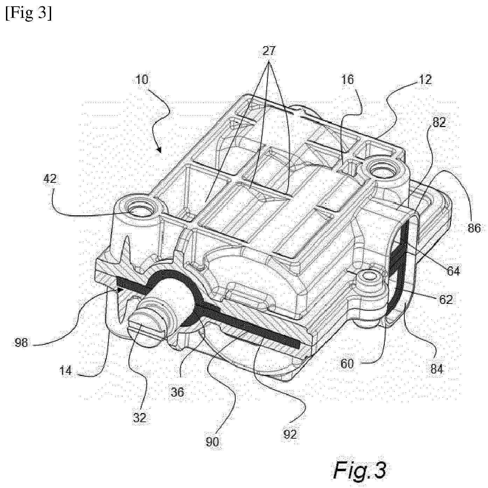

Par ailleurs, localement, le joint 90 peut être surmoulé sur les deux faces des bordures 14E et 16E des demi-coques 14, 16 par exemple au niveau de l'orifice de sortie 36, comme cela est visible sur **la** **figure 3** ou encore autour des orifices d'interconnexion électrique 62 et 64. **Sur cette** **figure 3** en effet, peut être observée la répartition du joint 90 localement autour et à proximité de l'orifice de sortie 36. On observe ainsi que la piste surmoulée 92 s'étend de façon continue sans interruption autour de la tige de poussée 32 afin de former un joint d'étanchéité annulaire 98.

La gorge 94 de réception du joint 90 périphérique est par exemple interrompue localement le long d'un relief incurvé complémentaire 36S de l'orifice 36 par une portion 96 de piste 92 surmoulée afin de former le joint d'étanchéité annulaire 98 autour de l'orifice externe 36 formé par la réunion des deux reliefs incurvés complémentaires 36I, 36S.

On voit ainsi sur **la** **figure 4** que le joint 90 suit sensiblement la bordure d'appui 14E de la demi-coque 14, sans s'en écarter, y compris à l'intérieur des reliefs incurvés 36I et 36S. Par ailleurs, la piste 92 de joint surmoulé s'étend le long du contour interne de chaque orifice d'interconnexion électrique 62 ou 64 ainsi qu'autour de chaque perçage 42.

A cet effet, la piste 92 est encore interrompue localement par une portion 100 de piste 92 surmoulée s'étendant sur une portion de la bordure d'appui 16E délimitant un bord rectiligne de l'orifice d'interconnexion électrique 64.

Par exemple, le joint 90 est réalisé dans une matière polymérisable telle qu'un polyuréthane et est surmoulé directement sur une des bordures 14E ou 16E des demi-coques 14 et16, pour être polymérisé au contact de cette pièce et être fixé à celle-ci par liaison chimique ou par affinité chimique de la matière polymérisable du joint et de la matière polymère de la demi-coque. Par exemple, le joint 90 et la demi-coque 14 ou 16 peuvent être réalisés dans une matière polymère de même type ou compatibles entre elles ou être formés tous les deux d'une même matière ayant des duretés différentes pour le joint 90 et pour la demi-coque 14 ou 16.

Par ailleurs, de façon avantageuse, la piste de surmoulage continue 92 formant le joint 90 peut comporter un prolongement 102 à l'intérieur du logement 57 du moteur 24 pour réaliser le relief nervuré 58 d'amortissement du bruit généré lors du fonctionnement du moteur 24, illustré sur **la** **figure 5****.** Ce prolongement 94 de la piste 102 n'a aucune fonction d'étanchéité mais contribue à l'atténuation du bruit généré par le moteur 24 en par un quadrillage en relief de la surface interne du logement 57 du moteur 24.

On va maintenant décrire les principaux aspects de fonctionnement d'un actionneur selon l'invention en référence **aux** **figures 1 à 15****.** Grâce à l'ajustement du logement interne du boîtier 12 dans plusieurs régions de ce logement autour de l'organe mécanique comprenant les principaux éléments fonctionnels de l'actionneur, les vibrations de cet organe mécanique sont contenues de sorte que le bruit résiduel lié à ces phénomènes vibratoires est atténué.

En effet, lorsque le moteur 24 est alimenté électriquement et activé, l'agencement à engrenage 28 entraîne la rotation dans un sens ou dans l'autre de l'arbre 26. La rotation de l'arbre 26 entraîne le déplacement de la tige de poussée 32 selon sa direction longitudinale. Les phénomènes vibratoires accompagnant ces mouvements sont atténués grâce à la conformation spécifique du boîtier 12 dans des régions R bien choisies et en particulier les régions R3 et R4 encadrant la roue dentée 30 ce qui permet de stabiliser son mouvement en rotation.

Ainsi, de façon avantageuse, les deux de palier de rotation 56 dans les régions R3 et R4 encadrant la roue dentée 30 et montés autour de l'arbre 26 supportant ladite roue dentée 30 permettent de limiter la vibration de la roue dentée 30. Ces deux paliers 56 sont de préférence quasi-circonférentiels voire circonférentiels et permettent ainsi de contenir les mouvements vibratoires de l'arbre 26 et de la roue dentée 30 tout en autorisant leur mouvement de rotation dans un sens ou dans l'autre. En outre, de façon avantageuse, le fourreau de coulissement 50 permet également de supprimer une grande partie des vibrations transmises par l'arbre 26. Enfin, le boîtier 56 comprend des reliefs d'amortissement du bruit produit par le moteur dans le logement du moteur 57.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après. C'est ainsi, notamment que l'on ne s'éloignerait pas du cadre de l'invention en modifiant les formes de détail de l'agencement d'engrenages, du moteur, de la prise de connexion électrique.

## Revendications

1. Actionneur (10) électromécanique pour véhicule automobile, en particulier pour actionner une ouverture d'une poignée de véhicule automobile, du type comprenant un boîtier (12) comprenant deux demi-coques inférieure (14) et supérieure (16) superposables l'une sur l'autre pour définir un logement interne du boîtier (12) à l'intérieur duquel sont disposés :
- un entraînement motorisé (22) comprenant un moteur électrique (24),
- un arbre (26) couplé en rotation avec le moteur par un agencement à engrenage (28) comprenant au moins une roue dentée (30) reliée solidaire en rotation à l'arbre (26),
- une tige de poussée (32) déplaçable longitudinalement hors du boîtier (12) selon un axe principal (X), en prise de force avec l'arbre (26),
**caractérisé en ce que** les demi-coques inférieure (14) et supérieure (16) comprenant respectivement des berceaux inférieur (44) et supérieur (46) de réception de l'organe mécanique comprenant l'arbre (26), de la tige (32) et de la roue dentée (30), les berceaux inférieur (44) et supérieur (46) délimitent, par complémentarité de forme au moins une région ajustée (R1, R2, R3, R4) épousant étroitement au moins localement de façon sensiblement circonférentielle la forme extérieure de l'organe mécanique, cette région (R1, R2, R3, R4) étant conformée pour contenir un mouvement vibratoire tout en autorisant un mouvement fonctionnel de l'organe.
